# EUROPEAN PATENT SPECIFICATION

(11) **EP 0 415 308 B1**
(45) Date of publication and mention of the grant of the patent: **12.01.1994**
(21) Application number: 90116360.0
(22) Date of filing: 27.08.1990
(51) Int. Cl.: B60L 7/28, H02K 49/04

(54) **Eddy current type brake system**
Bremssystem des Wirbelstrom-Typs
Système de freinage de type courants de Foucault

(30) Priority: 28.08.1989 JP 218499/89
(43) Date of publication of application: 06.03.1991
(73) Proprietor: Isuzu Motors Limited, Shinagawa-ku, Tokyo 140 (JP)
(72) Inventor: Kuwahara, Touru, Yokohama-shi, Kanagawa (JP)
(74) Representative: Kraus, Walter, Dr.

(56) References cited:
- EP-A- 0 077 702
- DE-A- 1 932 845
- US-A- 4 853 573
- PATENT ABSTRACTS OF JAPAN, vol. 13, no. 103 (E-725)(3451) 10 March 1989 ; & JP-A-63 274 358 (TOKYO BUHIN KOGYO K.K.) 11 November 1988

## Description

The present invention relates to an eddy current type brake system for a vehicle, and more particularly to an eddy current type brake system which allows a rotor to produce an eddy current by use of permanent magnets.

Generally, an eddy current type brake system is known as a retarder which applies a steady brake force to a vehicle so as to control a deceleration of the vehicle during a long down slope driving and prevent a foot brake (main brake) from burning.

The eddy current type brake system comprises a rotor mounted on a rotative shaft (for example, a propeller shaft) drivingly connected with wheels of the vehicle, and a magnet source including an electromagnet and a permanent magnet on a body frame of the vehicle. A difference in relative speed between the magnet source on the body frame (stationary member) and the rotor on the rotative shaft (rotary member) allows the rotor to produce an eddy current which applies the brake force to its rotation so as to decelerate the vehicle.

To miniaturize and lighten such an eddy current type brake system, it is advisable to use a compact permanent magnet providing strong magnetic force as the magnet source.

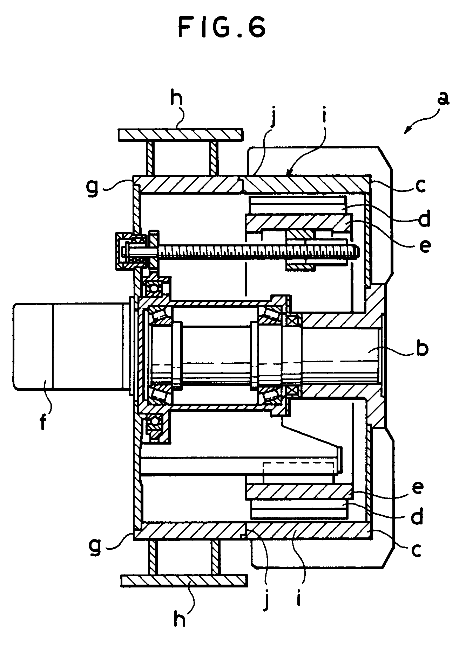

Figure 6 shows a conventional eddy current type brake system (a) using a permanent magnet as the magnet source.

A cylindrical, drum-like rotor (c) is fit on one end of a rotating shaft (b). Permanent magnets (d) are located inside the drum and supported by the body frame (not shown) (stationary member) of the vehicle in a manner such that the permanent magnets (d) can move between a position at which the permanent magnets (d) face the rotor (c) entirely and another position at which they do not face the rotor (c) entirely.

The rotor (c) is formed from materials having conductive and magnetic characteristics, for example, Fe material. The permanent magnets (d) are formed from rare earth elements such as neodymium to provide strong magnetic force.

A ring member (e) is provided inside the rotor (c). The ring member (e) is a cylindrical member having a mutual center axis with the rotor (c) and having a diameter smaller than the rotor (c). The permanent magnets (d) are installed on the support ring (e) circumferentially with their S poles and N poles being arranged alternately and with the S pole of one magnet (d) being positioned closed to the N pole of the adjacent magnet (d). When the support ring (e) is moved in the axial direction of the rotating shaft (b) by means of a motor (f) to have the permanent magnets (d) opposed fully to the rotor (c) (right in the drawing), a plurality of magnetic circuits are formed between the rotor (c) and the permanent magnets (d). Each magnetic circuit magnetically connects the N pole of one magnet (d), the rotor (c), the S pole of an adjacent magnet (d), the N pole of the same magnet (d) and the above-mentioned one magnet (d). A difference in relative speed between the rotating rotor (c) and the permanent magnets on the fixed side produces an eddy current to brake the rotor (c) whereby the rotation of the rotor (c) is decelerated and the rotating shaft (b) eventually stops. When the permanent magnets (d) are entirely moved from the rotor (c), the rotor (c) is released from the brake force or the brake force against the rotor (c) is not produced any more.

A cylindrical element (g) having the same diameter as the rotor (c) is mounted on a free end of the rotor (c), as shown in Figure 6. The cylindrical element (g) is supported on the body frame of the vehicle via extensions (h) so that the cylindrical element (g) is separated from the rotor (c). The cylindrical element (g) forms a casing 1 for the permanent magnet (d) together with the rotor (c).

For such an eddy current type brake system (a) equipped with the permanent magnets (d), it is necessary to protect the permanent magnets (d) from moisture, dust and heat in order to prevent deterioration of the permanent magnets (d) and magnetic force of the permanent magnets (d).

Referring to the eddy current type brake system (a) shown in Figure 6, the casing (i) which covers the permanent magnets (d) is made from the rotative rotor (c) and the stationary cylindrical element (g), which means that they are slidable relative to each other, and therefore moisture and dust may reach the permanent magnets (d) through a small clearance (j) between the rotor (c) and the cylindrical element (g). In addition, when the permanent magnets (d) are fully opposed to the rotor (c) to apply the brake force to the rotating shaft (b), the permanent magnets (d) may suffer directly heat of the rotor (c) heated by the eddy current generated. This might result in heat deterioration of the brake system. Furthermore, since the permanent magnets (d) are formed from the rare earth metal, the deteriorations caused by moisture, dust, and heat appear more seriously.

An object of the present invention is to prevent the deteriorations of the magnetism of the magnets which are caused by the moisture, dust and heat.

According to one aspect of the present invention, there is provided an eddy current type brake system for a vehicle comprising a rotor mounted on a rotative shaft of an engine of the vehicle, permanent magnets which apply a brake to the rotative shaft by approaching the rotor and release the applied brake by leaving the rotor, and a casing provided between the rotor and the permanent magnets for sealingly covering the permanent magnets in a manner such that the permanent magnets can approach and leave the rotor. According to this arrangement, since the casing seals the permanent magnets, moisture and duct do not reach the permanent magnets. Also, since the casing extends between the rotor and the permanent magnets, the influence of the heat produced by the eddy current is weakened by the casing, with respect to the permanent magnets.
- Figure 1: is a sectional view showing an embodiment of an eddy current type brake system according to the present invention;
- Figure 2: is a partial perspective view showing a casing of Figure 1;
- Figure 3: is a sectional view showing an overall view of the eddy current type brake system of Figure 1;
- Figure 4: is a sectional view taken along the line IV-IV of Figure 3;
- Figure 5: is a sectional view taken along the line V-V of Figure 3; and
- Figure 6: is a sectional lateral view of a conventional eddy current type brake system.

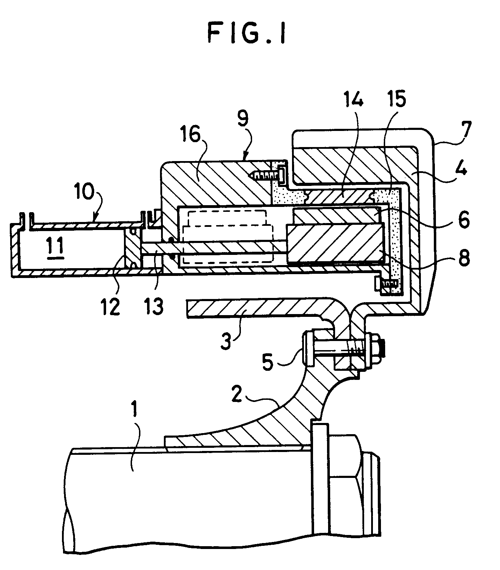

An embodiment of the present invention will be described with reference to Figures 1 to 5 of the accompanying drawings.

Referring to Figure 1, a flange 2 is formed on an output shaft 1 of a transmission of a vehicle. The flange 2 extends in the radial direction of the shaft 1. A brake drum 3 for a parking brake and a drum type rotor 4 of an eddy current type brake system are mounted on the flange 2 together with a bolt 5.

The rotor 4 is formed into cylindrical shape and has a base. The rotor 4 is made from conductive and magnetic materials. Permanent magnets 6 are located inside of the drum-shaped rotor 4 and supported by a transmission casing (not shown) in a manner such that the permanent magnets 6 can move in an axial direction of the rotor 4. specifically, the magents 6 can approach and leave the rotor 4. Cooling fins 7 are formed on an outer wall of the drum 4.

The permanent magnets 6 are formed from rare earth elements such as neodymium providing strong magnetic force, and compact in size and light in weight. And even number of pieces (about 8-12) of permanent magnets are located circumferentially on a support ring 8 at given intervals with their S and N poles being reversed alternately.

The permanent magnets 6 and the support ring 8 on which the permanent magnets are provided circumferentially are sealed by a casing 9. The casing 9 allows the permanent magnets 6 to approach and leave the rotor 4. The case 9 is located inside the rotor 4 with a predetermined clearance being maintained therebetween. An actuator 10 is attached on the casing 9 to move the permanent magnets 6 in the vicinity of the rotor 4 and to move the permanent magnets 6 far from rotor 4.

The actuator 10 includes a hollow cylinder 11, a piston 12 movably provided in the cylinder 11 and a push rod 13 connecting the support ring 8 with the piston 12. High pressure air is charged in and discharged out of the cylinder 11 to operate the piston 12, the permanent magnets 6 on the support ring 8 moved right and left in the drawing via the push rod 13.

The casing 9 tightly encloses the permanent magnets 6 and the supporting ring 8. The casing 9 is formed partially from a ferro-magnetic material with high permeability and partially from a non-magnetic material with low permeability. Specifically, that part 14 of the casing 9 ("pole piece" 14) which faces the permanent magnets 6 when the support ring 8 comes to the rightmost position (braking position) as indicate by the solid line in the drawing is made from a low-carbon iron, which is close to a pure iron, for example from a ferro-magnetic material such as a ferrite iron, parts 15 next to the ferromagnetic part 14 is made from a non-magnetic material such as aluminum, and that part 16 which faces the permanent magnets when the support ring 8 comes to the leftmost position (brake releasing position) as indicated by the dashed line is made from low-carbon iron, for example from a ferro-magnetic material such as ferrite, like the pole piece 14.

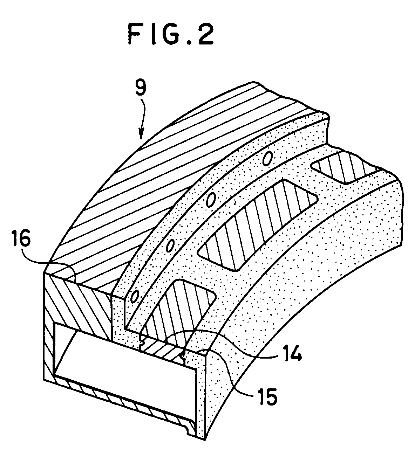

A perspective view of the case 9 is shown in Figure 2. As mentioned above, the casing 9 includes the ferro-magnetic parts 14 and 16 as indicated by the oblique lines and the non-magnetic part 15 as indicated by the dots. Among the ferro-magnetic parts, the part 14 includes a plurality of pole pieces which respectively face a plurality of permanent magnets 6 on the support ring 8 when the support ring 8 is moved in the braking position. In other words, one pole piece 14 makes a pair with one permanent magnet 6 when the support ring 8 comes to the braking position. Thus, the ferro-magnetic part 14 is discontinuous in the circumferential direction of the support ring 8. The other ferro-magnetic part 16 is a one piece element and continuous in the circumferential direction of the support ring 8.

The ferro-magnetic part 16 and the non-magnetic material 15 are tightly joined with each other with screws. The part 14 and 15 are also tightly joined with each other by a proper engagement or a sealing agent. The tight joint is possible since all the members 14, 15 and 16 are stationary members. If one of them is a rotative member, like the conventional arrangement, the tight joint is practically impossible. The structure of the embodiment according to the present invention allows the casing 9 to shut out external moisture and dusts. This cannot be attained by the conventional structure.

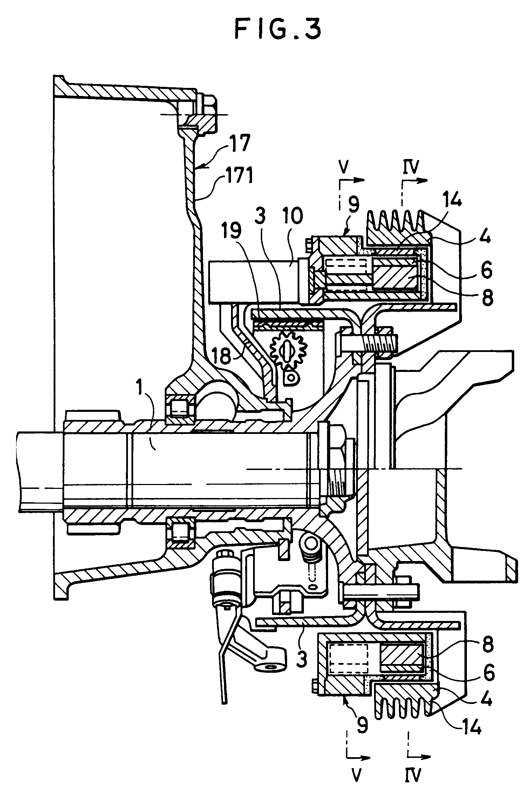

Figure 3 illustrates an overall sectional view of the eddy current type brake system having a structure explained above.

The rotor 4 of the eddy current type retarder and the brake drum 3 for the parking brake are mounted on the output shaft 1 at a rear element 171 of a transmission housing 17, and the magnet casing 9 is mounted on the transmission casing 17 with the extension 18. Numeral 19 designates brake shoes of the parking brake.

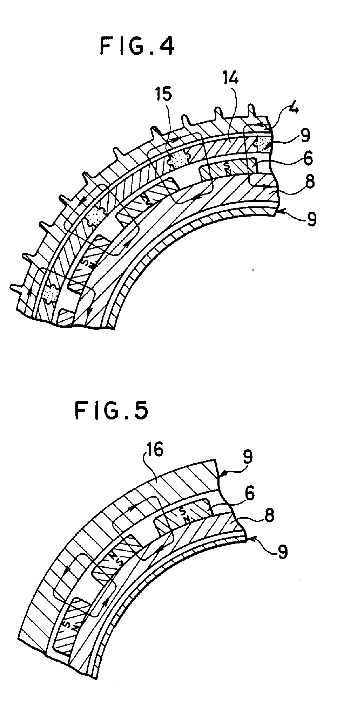

When the brake force to the rotor 4 is necessary, the support ring 8 is moved to the braking position by the actuator 10 so that the permanent magnets 6 entirely face the pole pieces 14. Thereupon, formed is a magnet circuit extending through the N pole of one magnet 6, the ferromagnetic part 14, the rotor 4, the adjacent ferromagnetic part 14, the S pole of the adjacent magnet 6, the N pole of the same magnet 6, the support ring 8, the S pole of the above-mentioned one magnet 6 and the N pole of the same magnet 6, as shown in Figure 4. From another point of view, it can be said that a magnetic circuit encircling the non-magnetic part 15 is formed because the non-magnetic part 15 allows the magnetic circuit to extend into the rotor 4. The eddy current flows in the magnetic circuit and the brake force is applied to the rotor 4.

To release the applied brake, the supporting ring 8 is moved away from the rotor 4 by the actuator 10 as indicated by the dashed line in Figure 3 and the permanent magnets 6 are located under the other ferromagnetic part 16, as shown in Figure 5. In this case, there is no non-magnetic part. Therefore, the magnetic circuit does not reach the rotor 4 but extends through the N pole of one magnet 6, the ferromagnetic part 16 of the casing 15, the S pole of the next magnet 6, the N pole of the same magnet 6, the support ring 8, the S pole of the above-mentioned one magnet 6 and the N pole of the same magnet. Therefore, the magnetic circuit does not penetrate the rotor 4. This means that the eddy current does not flow in the rotor 4 and no brake force due to the eddy current is applied on the rotor 4. The magnetic flux of the permanent magnets 6 do not leak toward the rotor 4 since the part 16 of the casing 9 is made from a ferromagnetic material.

The rotor 4 becomes hot as the eddy current flows in the rotor 4. However, a considerable amount of heat of the rotor 4 is absorbed by the casing 9 located between the rotor 4 and the permanent magnets 6 so that the influence of the heat of the rotor 4, on the permanent magnets 6 is small. Also, there is a clearance between the rotor 4 and the casing 9 so that air in the clearance serves as the heat insulator, too.

The casing 9 protects the permanent magnets 6 from dusts, moisture and heat so that the permanent magnets 6 can continuously exhibit their ferromagnetic characteristic.

## Claims

1. An eddy current type brake system for a vehicle, the brake system producing an eddy current in a rotor (4) coupled with a shaft (1) driven by an engine of the vehicle such that the eddy current applies a brake force to the rotor (4), characterized in that the brake system comprises:
a permanent magnet (6) for causing the eddy current to flow in the rotor (4) to apply the brake force to the rotor (4) when the permanent magnet (6) is moved in a vicinity of the rotor (4) whereas for not causing an eddy current to flow in the rotor (4) to apply no brake force to the rotor (4) when the permanent magnet (6) is moved away from the rotor (4); and
a casing (9) for sealingly housing the permanent magnet (6).

2. The brake system of claim 1, characterized in that the rotor (4) is has a shape of a hollow drum having a circumferential direction and a longitudinal direction and that the permanent magnet (6) is located inside the rotor (4) such that the magnet (6) can move in the longitudinal direction of the drum (4) inside the hollow drum (4).

3. The brake system of claim 1 or 2, characterized in that a 10 plurality of permanent magnets (6) are provided along the circumferential direction of the rotor (4) with predetermined intervals with their N and S poles being arranged alternately.

4. The brake system of one of the foregoing claims, characterized in that that part (16) of the casing (9) which faces the permanent magnet when the permanent magnets (6) are moved away from the rotor (4) is made from a ferromagnetic material and this part defines- a first ferromagnetic part (16), and that the magnetism of the permanent magnets (6) is shielded inside the casing (9) by the first ferromagnetic part (16) when the permanent magnets (6) are moved away from the rotor (4).

5. The brake system of one of claims 1 to 4, characterized in that that part (14) of the casing (9) which directly faces the permanent magnets (6) when the permanent magnets (6) are moved in the vicinity of the rotor (4) is made from a ferromagnetic material and this part defines a second ferromagnetic part (14), and that a part (15) of the casing (9) next to the second ferromagnetic part (15) is made from a non-magnetic material, in a manner such that the permanent magnets (6) are magnetically connected with 35 the rotor (4) through the second ferromagnetic part (15).

6. The brake system of one of claims 1 to 5, characterized in that the rotative shaft (1) is an output shaft of a transmission of the vehicle.

7. The brake system of one of claims 1 to 6, characterized in that a drum (3) for a Parking brake is also mounted on the rotor (4)

8. The brake system of one of claims 1 to 7, characterized in that the permanent magnet (6) is made from a material including a rare earth metal.

9. The brake system of one of claims 1 to 8, characterized in that the rare earth metal includes neodymium.

## Patentansprüche

1. Ein Bremssystem vom Wirbelstromtyp für ein Fahrzeug, wobei das Bremssystem in einem Rotor (4), welcher mit einer durch einen Motor des Fahrzeugs angetriebenen Welle (1) gekoppelt ist, einen Wirbelstrom erzeugt, derart, daß der Wirbelstrom eine Bremskraft auf den Rotor (4) ausübt, dadurch **gekennzeichnet,** daß das Bremssystem umfaßt:
einen Permanentmagneten (6) zum Bewirken, daß der Wirbelstrom in dem Rotor (4) fließt, um die Bremskraft auf den Rotor (4) anzuwenden, wenn der Permanentmagnet (6) in eine Nähe des Rotors (4) bewegt ist, dagegen zum Nichtbewirken des Fließens eines Wirbelstroms in dem Rotor (4), um keine Bremskraft auf den Rotor (4) anzuwenden, wenn der Permanentmagnet (6) von dem Rotor (4) weg bewegt ist; und
ein Gehäuse (9) zum abgeschlossenen Unterbringen des Permanentmagneten (6).

2. Das Bremssystem des Anspruchs 1, dadurch **gekennzeichnet,** daß der Rotor (4) eine Form einer hohlen Trommel hat, die eine Umfangsrichtung und eine Längsrichtung hat, und daß sich der Permanentmagnet (6) innerhalb des Rotors (4) derart befindet, daß sich der Magnet (6) in der Längsrichtung der Trommel (4) innerhalb der hohlen Trommel (4) bewegen kann.

3. Das Bremssystem des Anspruchs 1 oder 2, dadurch **gekennzeichnet,** daß eine 10-Mehrzahl von Permanentmagneten (6) entlang der Umfangsrichtung des Rotors (4) in vorbestimmten Intervallen vorgesehen sind, wobei ihre N- und S- Pole abwechselnd angeordnet sind.

4. Das Bremssystem von einem der vorhergehenden Ansprüche, dadurch **gekennzeichnet,** daß jener Teil (16) des Gehäuses (9), welcher dem Permanentmagneten gegenüberliegt, wenn die Permanentmagnete (6) von dem Rotor (4) weg bewegt sind, aus einem ferromagnetischen Material hergestellt ist, und dieser Teil einen ersten ferromagnetischen Teil (16) definiert, und daß der Magnetismus der Permanentmagnete (6) innerhalb des Gehäuses (9) durch den ersten ferromagnetischen Teil (16) abgeschirmt ist, wenn die Permanentmagnete (6) von dem Rotor (4) weg bewegt sind.

5. Das Bremssystem von einem der Ansprüche 1 bis 4, dadurch **gekennzeichnet,** daß jener Teil (14) des Gehäuses (9), welcher den Permanentmagneten (6) direkt gegenüberliegt, wenn die Permanentmagnete (6) in die Nähe des Rotors (4) bewegt sind, aus einem ferromagnetischen Material hergestellt ist und dieser Teil einen zweiten ferromagnetischen Teil (14) definiert, und daß ein Teil (15) des Gehäuses (9), der gleich neben dem zweiten ferromagnetischen Teil (15) ist, aus einem nichtmagnetischen Material hergestellt ist, in einer solchen Art und Weise, daß die Permanentmagneten (6) magnetisch mit 35 dem Rotor (4) durch den zweiten ferromagnetischen Teil (15) verbunden sind.

6. Das Bremssystem von einem der Ansprüche 1 bis 5, dadurch **gekennzeichnet,** daß die drehbare Welle (1) eine Ausgangswelle eines Getriebes des Fahrzeugs ist.

7. Das Bremssystem von einem der Ansprüche 1 bis 6, dadurch **gekennzeichnet,** daß eine Trommel (3) für eine Parkbremse auch auf den Rotor (4) angebracht ist.

8. Das Bremssystem von einem der Ansprüche 1 bis 7, dadurch **gekennzeichnet,** daß der Permanentmagnet (6) aus einem Material hergestellt ist, das ein Seltene-Erde-Metall umfaßt.

9. Das Bremssystem von einem der Ansprüche 1 bis 8, dadurch **gekennzeichnet,** daß das Seltene-Erde-Metall Neodym umfaßt.

## Revendications

1. Système de frein du type à courants de Foucault pour un véhicule, le système de frein produisant des courants de Foucault dans un rotor (4) relié à un arbre (1) entraîné par un moteur du véhicule, de telle manière que les courants de Foucault appliquent une force de freinage au rotor (4), caractérisé en ce que le système de frein comprend :
un aimant permanent (6) pour amener les courants de Foucault à circuler dans le rotor (4) pour appliquer la force de freinage au rotor (4) lorsque l'aimant permanent (6) est déplacé à proximité du rotor (4), ainsi que pour ne pas amener les courants de Foucault à circuler dans le rotor (4) afin de ne pas appliquer de force de freinage au rotor (4) lorsque l'aimant permanent (6) est éloigné du rotor (4) ; et
un carter (9) pour loger hermétiquement l'aimant permanent (6).

2. Système de frein selon la revendication 1, caractérisé en ce que le rotor (4) a la forme d'un cylindre creux ayant un sens circonférentiel et un sens longitudinal et en ce que l'aimant permanent (6) est placé à l'intérieur du rotor (4) de telle manière que l'aimant (6) puisse se déplacer dans le sens longitudinal du cylindre (4) à l'intérieur du cylindre creux (4).

3. Système de frein selon la revendication 1 ou 2, caractérisé en ce qu'une pluralité d'aimants permanents (6) est prévue dans le sens circonférentiel du rotor (4) à intervalles prédéterminés, leurs pôles N et S étant disposés en alternance.

4. Système de frein selon l'une des revendications précédentes, caractérisé en ce que la partie (16) du carter (9), qui fait face à l'aimant permanent lorsque les aimants permanents (6) sont éloignés du rotor (4), est faite d'un matériau ferromagnétique, et en ce que cette partie définit une première partie ferromagnétique (16) et en ce que le magnétisme des aimants permanents (6) est blindé à l'intérieur du carter (9) par la première partie ferromagnétique (16) lorsque les aimants permanents (6) sont écartés du rotor (4).

5. Système de frein selon l'une des revendications 1 à 4, caractérisé en ce que la partie (14) du carter (9) qui fait directement face aux aimants permanents (6) lorsque les aimants permanents (6) sont déplacés à proximité du rotor (4) est faite d'un matériau ferromagnétique et en ce que cette partie définit une seconde partie ferromagnétique (14), et en ce qu'une partie (15) du carter (9) faisant suite à la seconde partie ferromagnétique (15) est faite d'un matériau amagnétique, de telle manière que les aimants permanents (6) soient magnétiquement connectés au rotor (4) par l'intermédiaire de la seconde partie ferromagnétique (15).

6. Système de frein selon l'une des revendications 1 à 5, caractérisé en ce que l'arbre rotatif (1) est un arbre de sortie d'une transmission du véhicule.

7. Système de frein selon l'une des revendications 1 à 6, caractérisé en ce qu'un tambour (3) pour un frein de stationnement est également monté sur le rotor (4).

8. Système de frein selon l'une des revendications 1 à 7, caractérisé en ce que l'aimant permanent (6) est fait d'un matériau comprenant un métal des terres rares.

9. Système de frein selon l'une des revendications 1 à 8, caractérisé en ce que le métal des terres rares comprend du néodyme.
